# EUROPEAN PATENT APPLICATION

(11) **EP 4 599 999 A1**
(43) Date of publication of application: **13.08.2025**
(21) Application number: 23874804.0
(22) Date of filing: 02.10.2023
(51) Int. Cl.: B25J 17/00, F16F 1/32

(54) **BENDING STRUCTURE AND SEMI-FINISHED PRODUCT THEREOF**

(30) Priority: 03.10.2022 JP 2022159648
(71) Applicant: NHK Spring Co., Ltd., Yokohama-shi, Kanagawa 236-0004 (JP)
(72) Inventor: HOTODA, Yuki, Yokohama-shi, Kanagawa 236-0004 (JP); INABA, Masahiro, Yokohama-shi, Kanagawa 236-0004 (JP)
(74) Representative: Becker, Eberhard
(86) International application number: PCT/JP2023/035860
(87) International publication number: WO 2024/075677

(57) **Abstract**

Provided is a bending structure which can relax a load exerted on a core material to inhibit abnormalities of a bending action when an urging force is applied to the bending structure. This bending structure comprises: a flexible core material 17 that allows bending against a compression force in the axial direction; an elastic member 19 that is positioned in parallel to the core material 17 and can compress in the axial direction; a base portion 3 that receives one side of the core material 17 and the elastic member 19 in the axial direction; and a mobile portion 5 that receives the other side of the core material 17 and the elastic member 19 in the axial direction, wherein, in a state in which the elastic member 19 is not compressed by the base portion 3 and the mobile portion 5, the core material 17 has a length in the axial direction that is shorter than the length in the axial direction between the base portion 3 and mobile portion 5 receiving sections 3b and 5b, and the elastic member 19 receives a load in the axial direction corresponding to the spacing between the base portion 3 and the mobile portion 5 and is compressed, and applies an urging force.

## Description

### Technical Field

The present invention relates to a bending structure and a semi-finished product thereof provided for a robot and the like.

### Related Art

A robot, a manipulator, an actuator, etc. may include a joint functional part that enables bending and extending. A bending structure such as the one described in Patent Document 1, for example, is used in such a joint functional part.

In the bending structure of Patent Document 1, an inner coil part and an outer coil part, which serve as a core material, and bellows, which serve as an elastic member on a radially outer side thereof, are disposed between a base part and a movable part, which serve as a one-side receiving member and an other-side receiving member.

The bending structure is configured to perform a bending action by stretching a drive wire joined to the movable part in an axial direction. In addition, during the bending action, unintended compression in the axial direction is suppressed by the inner and outer coil parts to stabilize the action.

In such a bending structure, an urging force is imparted to urge the base part and the movable part to separate from each other in the axial direction, and slack in the drive wire is prevented. This urging force may be set by compressing the inner and outer coil parts and the bellows in the axial direction with a load corresponding to a spacing between the base part and the movable part.

However, the load applied when setting the urging force is mainly received by the inner and outer coil parts, which serve as the core material. As a result, flexibility of the inner and outer coil parts may be affected, and an abnormality may occur in the bending action of the bending structure.

Similarly, such an issue also occurs in the case of using another core material such as a close-contact spring or a columnar body instead of the inner and outer coil parts.

### Related Art Documents

### Patent Documents

Patent Document 1: Japanese Patent Application Laid-Open No. 2020-26021

### SUMMARY OF INVENTION

### Problem to Be Solved by Invention

The problem to be solved lies in that, in the case where an urging force is imparted to a bending structure, an abnormality may occur in a bending action of the bending structure. Means for Solving Problem

The present invention provides a bending structure capable of bending from an extended state to a bent state. The bending structure includes a core material, an elastic member, a one-side receiving member, and an other-side receiving member. The core material resists a compressive force in an axial direction and has flexibility allowing the bending. The elastic member is located parallel with the core material and is compressible in the axial direction. The one-side receiving member has a receiving part that receives one axial side of the core material and the elastic member. The other-side receiving member has a receiving part that receives another axial side of the core material and the elastic member. In a state in which the elastic member is received by the one-side receiving member and the other-side receiving member and is non-compressed, the core material has a length in the axial direction that is shorter than a length in the axial direction between the receiving parts, which receive the core material, of the one-side receiving member and the other-side receiving member. The elastic member receives and is compressed by a load in the axial direction corresponding to a spacing between the one-side receiving member and the other-side receiving member and imparts an urging force.

In addition, the present invention provides a semi-finished product of a bending structure capable of bending from an extended state to a bent state. The semi-finished product of the bending structure includes a core material, an elastic member, a one-side receiving member, and an other-side receiving member. The core material resists a compressive force in an axial direction and has flexibility allowing the bending. The elastic member is located parallel with the core material and is compressible in the axial direction. The one-side receiving member has a receiving part that receives one axial side of the core material and the elastic member. The other-side receiving member has a receiving part that receives another axial side of the core material and the elastic member. The elastic member is in a non-compressed state received by the one-side receiving member and the other-side receiving member. The core material has a length in the axial direction that is shorter than a length in the axial direction between the receiving parts, which receive the core material, of the one-side receiving member and the other-side receiving member.

### Effects of Invention

According to the present invention, in the case where an urging force is generated in the bending structure, the load applied to the core material can be alleviated to suppress an abnormality in the bending action.

### BRIEF DESCRIPTION OF THE DRAWINGS

[FIG. 1] FIG. 1 is a perspective view of a bending structure according to Embodiment 1 of the present invention.
[FIG. 2] FIG. 2 is a side view of the bending structure in FIG. 1.
[FIG. 3] FIG. 3 is a cross-sectional view of the bending structure in FIG. 2.
[FIG. 4] FIG. 4(A) is a side view showing a state of the bending structure in FIG. 1 after imparting an urging force, and FIG. 4(B) is a side view showing a state before imparting the urging force.
[FIG. 5] FIG. 5(A) is a cross-sectional view showing a state of the bending structure in FIG. 1 after imparting an urging force, and FIG. 5(B) is a cross-sectional view showing a state before imparting the urging force.
[FIG. 6] FIG. 6 is a side view of a bending structure according to Embodiment 2 of the present invention.

### EMBODIMENTS FOR IMPLEMENTING INVENTION

The present invention achieves an objective of alleviating a load applied to a core material to suppress an abnormality in a bending action in the case of imparting an urging force to a bending structure, by receiving the load with an elastic member provided in parallel with the core material.

As shown in the figures, a bending structure 1 of the present invention is capable of bending from an extended state to a bent state, and includes a core material 17, an elastic member 19, a one-side receiving member 3, and an other-side receiving member 5. The core material 17 is a member that resists a compressive force in an axial direction and has flexibility allowing bending of the bending structure 1. The elastic member 19 is located parallel with the core material 17 and is compressible in the axial direction. The one-side receiving member 3 is a member having receiving parts 3a and 3b that receive one axial side of the core material 17 and the elastic member 19. The other-side receiving member 5 is a member having receiving parts 5a and 5b that receive the other axial side of the core material 17 and the elastic member 19.

In a state in which the elastic member 19 is received by the one-side receiving member 3 and the other-side receiving member 5 and is non-compressed, the core material 17 has an axial length that is shorter than an axial length between the receiving parts 3b and 5b, which receive the core material 17, of the one-side receiving member 3 and the other-side receiving member 5. The elastic member 19 receives and is compressed by a load in the axial direction corresponding to a spacing between the one-side receiving member 3 and the other-side receiving member 5, and imparts an urging force to the bending structure 1.

The core material 17 may be interposed in a non-compressed state between the abutting receiving parts 3b and 5b of the one-side receiving member 3 and the other-side receiving member 5.

The elastic member 19 may be compressed by an amount equal to or greater than a difference between the axial length of the core material 17 and the axial length between the receiving parts 3b and 5b.

The core material 17 may be in various forms, and may be configured as a multi-flexible body. In that case, the core material 17 includes an outer coil spring 21 and an inner coil spring 23 disposed on an inner side of the outer coil spring 21, and a wire of the inner coil spring 23 fits between a wire of the outer coil spring 21.

The bending structure 1 may include a spacing adjustment part 27 that adjusts the spacing between the one-side receiving member 3 and the other-side receiving member 5.

The spacing adjustment part 27 includes multiple cord-shaped members 13 having one side fixed to the one-side receiving member 3 and the other side routed through the other-side receiving member 5, to serve to operate the bending from the extended state to the bent state. The cord-shaped members 13 may be used for adjustment of the spacing.

Similar to the bending structure 1, a semi-finished product 1a of the bending structure 1 includes the core material 17, the elastic member 19, the one-side receiving member 3, and the other-side receiving member 5. In the semi-finished product 1a, the elastic member 19 is in a non-compressed state received by the one-side receiving member 3 and the other-side receiving member 5, and the core material 17 has an axial length that is shorter than an axial length between the receiving parts 3b and 5b, which receive the core material 17, of the one-side receiving member 3 and the other-side receiving member 5.

### Embodiment 1

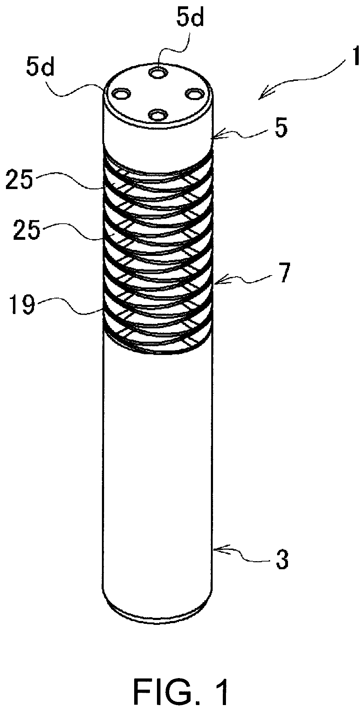

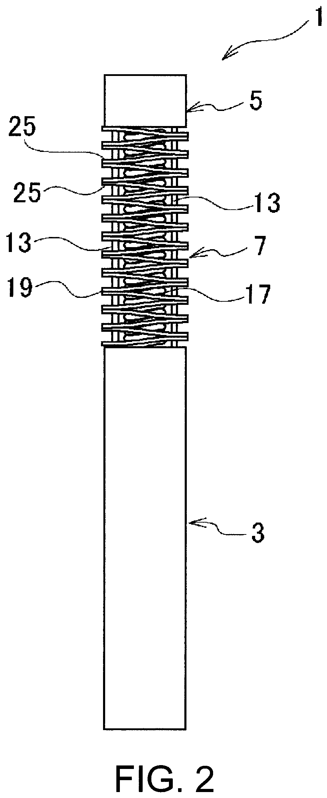

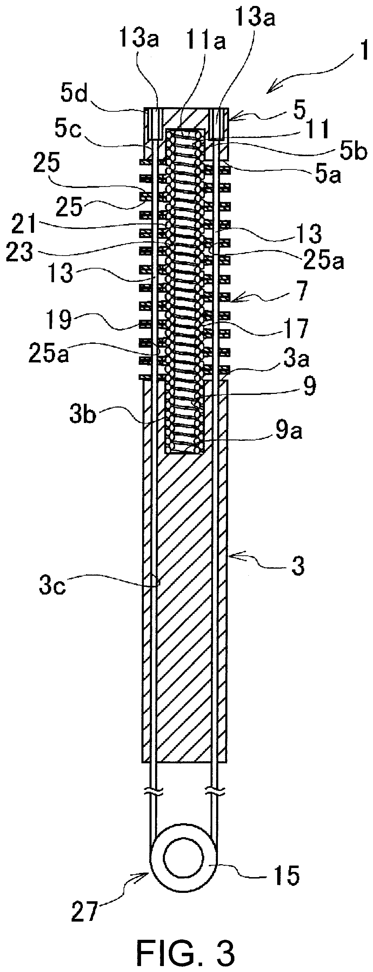

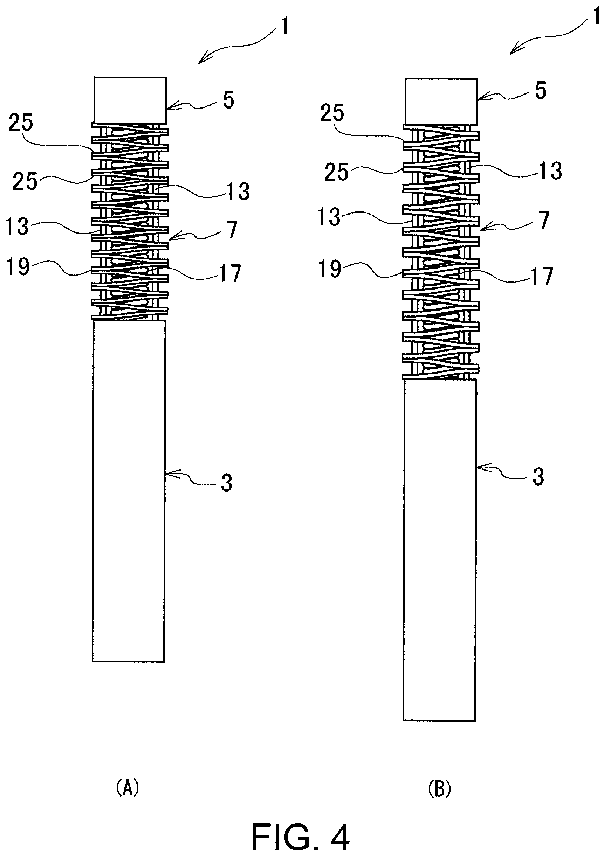

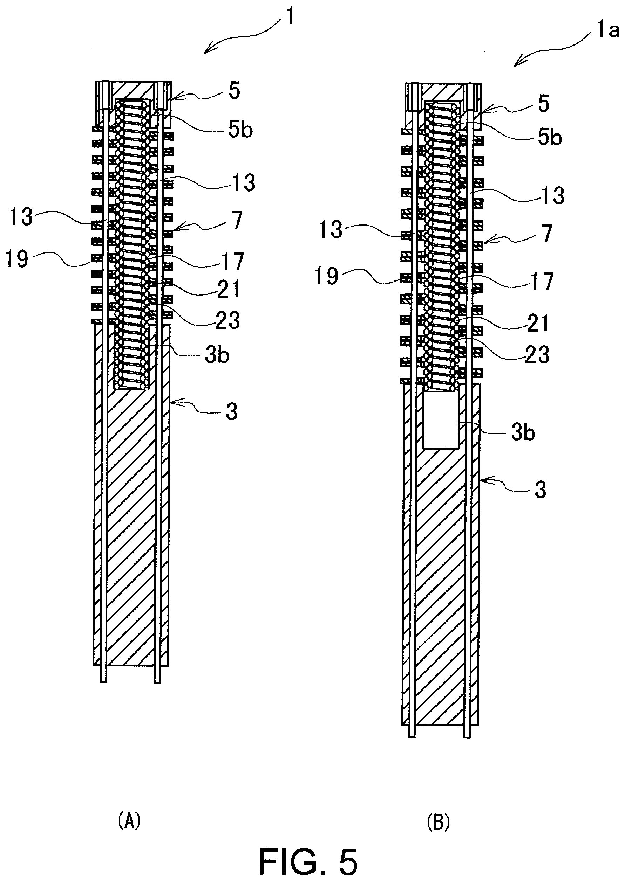

FIG. 1 is a perspective view of a bending structure according to Embodiment 1 of the present invention. FIG. 2 is a side view of the bending structure in FIG. 1. FIG. 3 is a cross-sectional view taken along line III-III in FIG. 2. FIG. 4(A) is a side view showing a state of the bending structure in FIG. 1 after imparting an urging force, and FIG. 4(B) is a side view showing a state before imparting the urging force. FIG. 5(A) is a cross-sectional view showing a state of the bending structure in FIG. 1 after imparting an urging force, and FIG. 5(B) is a cross-sectional view showing a state before imparting the urging force.

The bending structure 1 is applicable to a joint functional part of various machines for medical or industrial uses, such as a manipulator, a robot, and an actuator. The joint functional part is an apparatus, a mechanism, a device, etc. having a function as a joint that bends and extends.

As shown in FIG. 1 to FIG. 5(B), the bending structure 1 of the present embodiment includes a base part 3, a movable part 5, and a bending part 7.

The base part 3 is composed of a columnar body, e.g., a cylindrical body, formed of metal or resin, and constitutes a one-side receiving member that receives one axial side of the bending part 7. The axial direction refers to a direction along an axis of the bending structure 1, and also includes directions slightly inclined with respect to the axis.

The base part 3 is coupled to a shaft of a manipulator or the like. The base part 3 is not limited to a columnar body, but may also be formed in an appropriate shape corresponding to the machine to which the bending structure 1 is applied.

Receiving parts 3a and 3b are provided at one axial end of the base part 3. The receiving part 3a is composed of an end surface of one end of the base part 3. The receiving part 3a is an annular region that receives one axial side of an elastic member 19 of the bending part 7 to be described later. In the present embodiment, the receiving part 3a is a planar surface along a radial direction of the bending structure 1. However, the receiving part 3a is not required to be a planar surface or an annular shape, as long as the receiving part 3a can receive the elastic member 19.

The receiving part 3b is composed of a recess 9 provided on an inner circumference of the one end of the base part 3. The recess 9 is provided along the axial direction, and a bottom part 9a of the recess 9 forms a planar surface along the radial direction. The receiving part 3b composed of the recess 9 is configured to receive one axial side of a core material 17 of the bending part 7 to be described later.

The receiving part 3b is not required to be configured by the recess 9. For example, the base part 3 may be configured in a hollow tubular shape, and the receiving part 3b may configured as a member such as a plate or a bracket fixed inside the base part 3. In addition, it is also possible to omit the recess 9 and configure the receiving part 3b as a planar surface on the same plane as the receiving part 3a.

Multiple, e.g., four, insertion holes 3c through which drive wires 13 (to be described later) of the bending structure 1 are inserted are provided at the base part 3 in a circumferential direction.

The movable part 5 is supported by the bending part 7 in a manner displaceable with respect to the base part 3. For example, an end effector or the like corresponding to the machine to which the bending structure 1 is applied is attached to the movable part 5.

Such a movable part 5 is composed of a columnar body, e.g., a cylindrical body, formed of metal or resin, and constitutes an other-side receiving member that receives the other axial side of the bending part 7. The other axial side of the bending part 7 refers to the opposite side to the one axial side received by the base part 3. Similar to the base part 3, the movable part 5 is formed in an appropriate shape corresponding to the machine to which the bending structure 1 is applied, and is not limited to a columnar body of metal or resin.

In the present embodiment, receiving parts 5a and 5b are provided at one axial end of the movable part 5. The receiving part 5a is composed of an end surface of one end of the movable part 5. The receiving part 5a is an annular region that receives the other axial side of the elastic member 19 of the bending part 7. The receiving part 5a is a planar surface along the radial direction of the bending structure 1. However, the receiving part 5a is not required to be a planar surface or an annular shape, as long as the receiving part 5a can receive the elastic member 19.

The receiving part 5b is composed of a recess 11 provided on an inner circumference of the one end of the movable part 5. The recess 11 is provided along the axial direction, and a bottom part 11a of the recess 11 forms a planar surface along the radial direction. The receiving part 5b composed of the recess 11 is configured to receive the other axial side of the core material 17 of the bending part 7.

The receiving part 5b is not required to be the recess 11. For example, the movable part 5 may be configured in a hollow tubular shape, and the receiving part 5b may configured as a member such as a plate or a bracket fixed inside the movable part 5. In addition, it is also possible to omit the recess 11 and configure the receiving part 5b as a planar surface on the same plane as the receiving part 5a.

Such a movable part 5 is provided with multiple, e.g., four, insertion holes 5c and locking holes 5d in the circumferential direction, respectively for inserting and locking the drive wires 13 of the bending structure 1. The insertion holes 5c and the locking holes 5d are in communication in the axial direction.

The drive wire 13 is a cord-shaped member that is operated for a bending action of the bending structure 1. In addition to a wire, the cord-shaped member may also be a stranded wire, a solid wire of nickel-titanium (NiTi) or the like, a piano wire, a multi-joint rod, a chain, a string, a thread, a rope, etc.

An end 13a of the drive wire 13 has a larger diameter compared to other portions of the drive wire 13 and is locked inside the locking hole 5d. The drive wire 13 is inserted and routed from the end 13a through the movable part 5, the bending part 7, and the base part 3 in the axial direction.

The drive wires 13 are provided at multiple spots in the circumferential direction of the bending structure 1, e.g., at four spots at 90-degree intervals. The drive wires 13 which are opposed to each other in the radial direction through the center of the bending structure 1 form pairs. Thus, in the present embodiment, two pairs of the drive wires 13 are included.

However, it is also possible to omit one pair of the drive wires 13, and the bending structure 1 only needs to include multiple drive wires 13. For example, three drive wires 13 may be provided. In that case, the drive wires 13 are preferably disposed at 120-degree intervals in the circumferential direction.

The drive wires 13 are configured to bend the bending structure 1 by being pulled in the axial direction. Thus, the drive wires 13 are connected directly or indirectly to an operating mechanism (not shown) and are configured to be operated in the axial direction.

In the present embodiment, the operation in the axial direction refers to pulling one of the pair of drive wires 13 in the axial direction and drawing back the other. Thus, the drive wires 13 of one pair in the present embodiment are continuous via a pulley 15. The drive wires 13 may also be configured to be pulled independently of each other.

The pulley 15 is attached to a fixed side, e.g., a shaft of a manipulator or the like. The pulley 15 is linked to an operating mechanism (not shown) and is operable. The pulling and drawing back operation of the drive wires 13 is performed by operation of the pulley 15.

The bending part 7 includes a core material 17 and an elastic member 19.

The core material 17 is configured to resist a compressive force in the axial direction and have flexibility allowing bending of the bending structure 1. The flexibility refers to flexibility that enables curving or bending of the axis.

The core material 17 may be in various forms, and in the present embodiment, the core material 17 is a multi-flexible body having an outer coil spring 21 and an inner coil spring 23. The core material 17 may also be a columnar body, a close-contact spring, or another tubular body capable of flexing to bend or curve the axis, or a structure obtained by connecting multiple members capable of swinging with respect to each other.

The outer coil spring 21 and the inner coil spring 23 may be each configured as a compression coil spring with a gap (pitch) between the wire or a tension coil spring without a pitch. The outer coil spring 21 and the inner coil spring 23 are disposed such that the inner coil spring 23 is located on the inner side of the outer coil spring 21.

The inner coil spring 23 is in a state of being screwed on the inner side of the outer coil spring 21. Accordingly, the wire of the inner coil spring 23 fits between the wire of the outer coil spring 21.

Both axial sides of the core material 17 with such a configuration are respectively received by the base part 3 and the movable part 5.

One side of the core material 17 is inserted in the axial direction into the recess 9 of the receiving part 3b of the base part 3. In this state, the one-side end of the core material 17 is abutted and received in the axial direction against the bottom part 9a of the recess 9. Similarly, the other side of the core material 17 is inserted in the axial direction into the recess 11 of the receiving part 5b of the movable part 5, and the other-side end of the core material 17 is abutted and received in the axial direction against the bottom part 11a of the recess 11.

In this state, the core material 17 is in a non-compressed state between the base part 3 and the movable part 5. The non-compressed state of the core material 17 includes not only a state of being not compressed at all under no load, but also a state in which the core material 17 is compressed in a range that does not affect the urging force of the elastic member 19 to be described later. The range that does not affect the urging force refers to a range in which a set urging force can be generated even if the core material 17 receives a load. However, the core material 17 may also be compressed as long as the load is received by the elastic member 19 as described later.

The urging force is a force by which the elastic member 19 urges the base part 3 and the movable part 5 in a direction separating in the axial direction, and a tension (initial tension) applied such that slack does not occur in the drive wire 13 is set.

The elastic member 19 is located parallel with the core material 17. The elastic member 19 is compressible in the axial direction and is a member having flexibility allowing bending of the bending structure 1. In the present embodiment, the elastic member 19 is composed of a laminated body obtained by laminating multiple wave washers 25. The elastic member 19 is in a tubular shape as a whole, and is located on a radially outer side of the core material 17 and is parallel with the core material 17.

"Parallel" refers to being parallel with respect to a load acting in the axial direction corresponding to a spacing between the base part 3 and the movable part 5. Thus, "parallel" also includes cases where the elastic member 19 is disposed to be concentric with the core material 17 or contain the core material 17, as in the present embodiment. However, the elastic member 19 may also be arranged side by side in parallel with the core material 17.

The elastic member 19 has insertion holes 25a provided at each wave washer 25 through which the drive wires 13 are inserted. The elastic member 19 may be bellows in an accordion shape, a coil spring, a multi-flexible body similar to the core material 17, another tubular body, etc.

Both axial sides of such an elastic member 19 are received by the base part 3 and the movable part 5, and the elastic member 19 is compressed in the axial direction by a load corresponding to the spacing between the base part 3 and the movable part 5. Due to this compression, the elastic member 19 imparts, to the bending structure 1, an urging force that urges the base part 3 and the movable part 5 in a direction separating from each other in the axial direction.

As shown in FIG. 4(B) and FIG. 5(B), in a non-compressed state of the elastic member 19, the core material 17 has an axial length that is shorter than an axial length between the receiving parts 3b and 5b, which receive the core material 17, of the base part 3 and the movable part 5. With the elastic member 19 compressed by an amount of this difference in length, the core material 17 is configured in a non-compressed state.

The elastic member 19 may also be compressed beyond the difference between the axial length between the receiving parts 3b and 5b and the axial length of the core material 17, in a range in which the core material 17 can be non-compressed (including a state of being compressed in a range that does not affect the urging force of the elastic member 19) as described above. Thus, it is sufficient for the elastic member 19 to be compressed by an amount equal to or greater than the difference between the axial length between the receiving parts 3b and 5b and the axial length of the core material 17.

The non-compressed state of the elastic member 19 refers to a state in which compression for imparting the set urging force is not performed, and includes not only a state of being not compressed at all under no load, but also a state of being compressed to an extent that does not impart the set urging force.

In the present embodiment, the state in which the elastic member 19 is non-compressed serves as a semi-finished product 1a of the bending structure 1. When the semi-finished product 1a is attached to a shaft of a manipulator or the like, the elastic member 19 is compressed to constitute the bending structure 1.

As shown in FIG. 4(A) to FIG. 5(B), in the case of generating an urging force, such a bending structure 1 receives a load corresponding to the spacing between the base part 3 and the movable part 5 by the elastic member 19 provided parallel with the core material 17. Thus, the load applied to the core material 17 can be alleviated or eliminated to suppress an abnormality in the bending action. In particular, linearity in a correlation between an increase in a bending angle of the bending structure 1 and an increase in the load can be improved. The bending angle herein refers to an angle formed between the axis of the base part 3 and the axis of the movable part 5, and the load refers to a load required for bending of the bending structure 1.

The core material 17 is a multi-flexible body including the outer coil spring 21 and the inner coil spring 23. Since the wire of the inner coil spring 23 fits between the wire of the outer coil spring, the core material 17 is susceptible to influence as a friction between the wires increases due to the load received in the axial direction. In the present embodiment, since the load applied to the core material 17 can be alleviated or eliminated, an abnormality in the bending action can be suppressed even if the core material 17 is a multi-flexible body.

In addition, in the present embodiment, the urging force acting on the bending structure 1 can be easily and reliably set by a spring constant of the elastic member 19 and the difference between the axial length between the receiving parts 3b and 5b of the base part 3 and the movable part 5 and the axial length of the core material 17.

During compression of the elastic member 19, since completion of compression can be recognized by reception of the core material 17 at the receiving parts 3b and 5b of the base part 3 and the movable part 5, the set urging force can be reliably obtained.

As shown in FIG. 3, compression for imparting the urging force of the elastic member 19 is performed by a spacing adjustment part 27 included in the bending structure 1 that adjusts the spacing between the base part 3 and the movable part 5.

The spacing adjustment part 27 includes multiple drive wires 13 serving as cord-shaped members, and pulleys 15. Thus, in the present embodiment, the drive wires 13 for operating extending and bending of the bending structure 1 are used to adjust the spacing between the base part 3 and the movable part 5. Accordingly, the spacing adjustment part 27 can be easily adopted without complicating the structure.

In other words, in the present embodiment, the spacing adjustment part 27 is supported at a shaft of a manipulator or the like in a manner capable of adjusting a position of the pulley 15 in the axial direction. By adjustment of the position of the pulley 15, the drive wire 13 is pulled to bias the movable part 5 toward the base part 3 side. Any appropriate support structure may be adopted as the support structure of the pulley 15.

### Embodiment 2

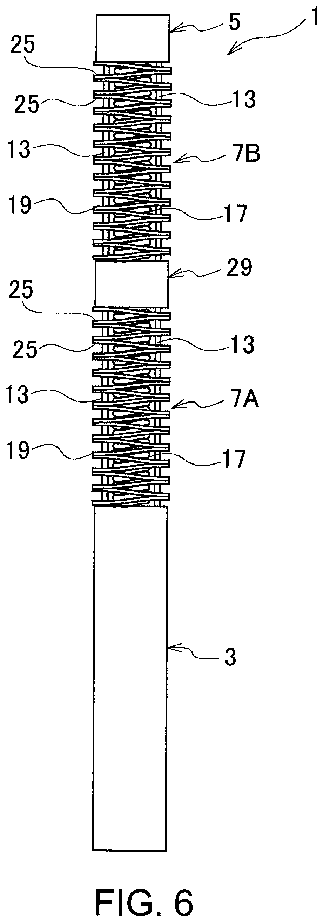

FIG. 6 is a side view of a bending structure according to Embodiment 2 of the present invention. In Embodiment 2, configurations corresponding to those in Embodiment 1 will be labeled with the same reference signs, and repeated descriptions will be omitted.

The bending structure 1 of the present Embodiment 2 has a multi-joint structure, and includes two bending parts 7A and 7B between the base part 3 and the movable part 5, and a middle part 29 between the bending parts 7A and 7B. The numbers of the bending parts 7A and 7B and the middle part 29 may also be increased.

Similar to the movable part 5, the middle part 29 is composed of a columnar body, e.g., a cylindrical body, formed of metal or resin. The middle part 29 constitutes an other-side receiving member that receives the other axial side of one bending part 7A, and also constitutes a one-side receiving member that receives one axial side of the other bending part 7B.

The bending parts 7A and 7B both have the same configuration as the bending part 7 in Embodiment 1. However, the core material 17 is shared by the bending parts 7A and 7B. Specifically, the core material 17 is received on one axial side by the base part 3, is inserted through the middle part 29, and is received on the other axial side by the movable part 5.

Other aspects are configured in the same manner as in Embodiment 1.

In such Embodiment 2, the same actions and effects as in Embodiment 1 can be achieved. In addition, in Embodiment 2, a larger load acts on the bending part 7A between the middle part 29 and the base part 3 to generate an urging force in the two bending parts 7A and 7B. Thus, in Embodiment 2, the effect of the elastic member 19 receiving the load is more significant.

### Reference Signs List

- 1: bending structure
- 1a: semi-finished product
- 3: base part
- 3a, 3b: receiving part
- 5: movable part
- 5a, 5b: receiving part
- 13: drive wire (cord-shaped member)
- 17: core material
- 19: elastic member
- 21: outer coil spring
- 23: inner coil spring
- 27: spacing adjustment part

## Claims

1. A bending structure capable of bending from an extended state to a bent state, the bending structure comprising:
a core material resisting a compressive force in an axial direction and having flexibility allowing the bending;
an elastic member located parallel with the core material and compressible in the axial direction;
a one-side receiving member having a receiving part that receives one axial side of the core material and the elastic member; and
an other-side receiving member having a receiving part that receives another axial side of the core material and the elastic member, wherein
in a state in which the elastic member is received by the one-side receiving member and the other-side receiving member and is non-compressed, the core material has a length in the axial direction that is shorter than a length in the axial direction between the receiving parts, which receive the core material, of the one-side receiving member and the other-side receiving member, and
the elastic member receives and is compressed by a load in the axial direction corresponding to a spacing between the one-side receiving member and the other-side receiving member and imparts an urging force.

2. The bending structure according to claim 1, wherein
the core material is interposed in a non-compressed state between the abutting receiving parts of the one-side receiving member and the other-side receiving member.

3. The bending structure according to claim 1 or 2, wherein
the elastic member is compressed by an amount equal to or greater than a difference between the length of the core material in the axial direction and the length in the axial direction between the receiving parts.

4. The bending structure according to claim 1 or 2, wherein
the core material is a multi-flexible body comprising an outer coil spring and an inner coil spring disposed on an inner side of the outer coil spring, and a wire of the inner coil spring fits between a wire of the outer coil spring.

5. The bending structure according to claim 1 or 2, comprising:
a spacing adjustment part adjusting the spacing between the one-side receiving member and the other-side receiving member.

6. The bending structure according to claim 5, wherein
the spacing adjustment part comprises a plurality of cord-shaped members having one side fixed to the one-side receiving member and another side routed through the other-side receiving member, to serve to operate the bending from the extended state to the bent state, and the cord-shaped members are used for adjustment of the spacing.

7. A semi-finished product of a bending structure capable of bending from an extended state to a bent state, the semi-finished product of the bending structure comprising:
a core material resisting a compressive force in an axial direction and having flexibility allowing the bending;
an elastic member located parallel with the core material and compressible in the axial direction;
a one-side receiving member having a receiving part that receives one axial side of the core material and the elastic member; and
an other-side receiving member having a receiving part that receives another axial side of the core material and the elastic member, wherein
the elastic member is in a non-compressed state received by the one-side receiving member and the other-side receiving member, and
the core material has a length in the axial direction that is shorter than a length in the axial direction between the receiving parts, which receive the core material, of the one-side receiving member and the other-side receiving member.
